# FASCICULE DE BREVET EUROPEEN

(11) **EP 2 184 245 B1**
(45) Date de publication et mention de la délivrance du brevet: **08.08.2012**
(21) Numéro de dépôt: 09290802.9
(22) Date de dépôt: 20.10.2009
(51) Int. Cl.: B65H 29/14, B65H 31/26, H04N 1/00

(54) **Dispositif de traitement de feuilles pourvu de moyens évitant un ravalement de feuille lors de la réinsertion d'une feuille**
Vorrichtung zur Verarbeitung von Blättern, die mit Mitteln zur Verhinderung eines Papierstaus beim Wiedereinführen eines Blatts ausgestattet ist
Device for treating sheets equipped with means for preventing lopping of a sheet when reinserting a sheet

(30) Priorité: 06.11.2008 FR 0806202
(43) Date de publication de la demande: 12.05.2010
(73) Titulaire: SAGEMCOM DOCUMENTS SAS, 92500 Rueil Malmaison (FR)
(72) Inventeur: Marcq, Frédéric, 92500 Rueil Malmaison (FR)
(74) Mandataire: Beaudouin-Lafon, Emmanuel

(56) Documents cités:
- JP-A- 2007 112 593
- US-A- 5 014 976
- US-A- 5 549 292
- US-A1- 2004 089 992
- US-A1- 2007 132 171

## Description

L'invention concerne un dispositif de traitement de feuilles en recto/verso, tel qu'un scanner capable de scanner successivement le recto et le verso des feuilles qu'il traite.

### ARRIERE PLAN DE L'INVENTION

Un tel appareil, qui est divulgué dans la demande de brevet FR 2877331, est représenté sur les figures 1 à 3 en y étant repéré par 1. Il comporte un bac d'approvisionnement 2 contenant des feuilles 3, 4 à traiter, un chemin 6 dans lequel une feuille 7 est engagée et déplacée pour traiter successivement son recto et son verso, et un bac de collecte 8 contenant un empilement de feuilles 9, 10 et 11 préalablement traitées.

Le chemin 6 a une forme générale de boucle, il comporte une première et une seconde extrémité 13 et 14 débouchant conjointement dans une voie de transfert 16, ainsi qu'une entrée de feuilles 17 située entre ces extrémités 13 et 14. Un canal 18 permet l'acheminement de chaque feuille à traiter depuis le bac d'approvisionnement 2, vers l'entrée 17.

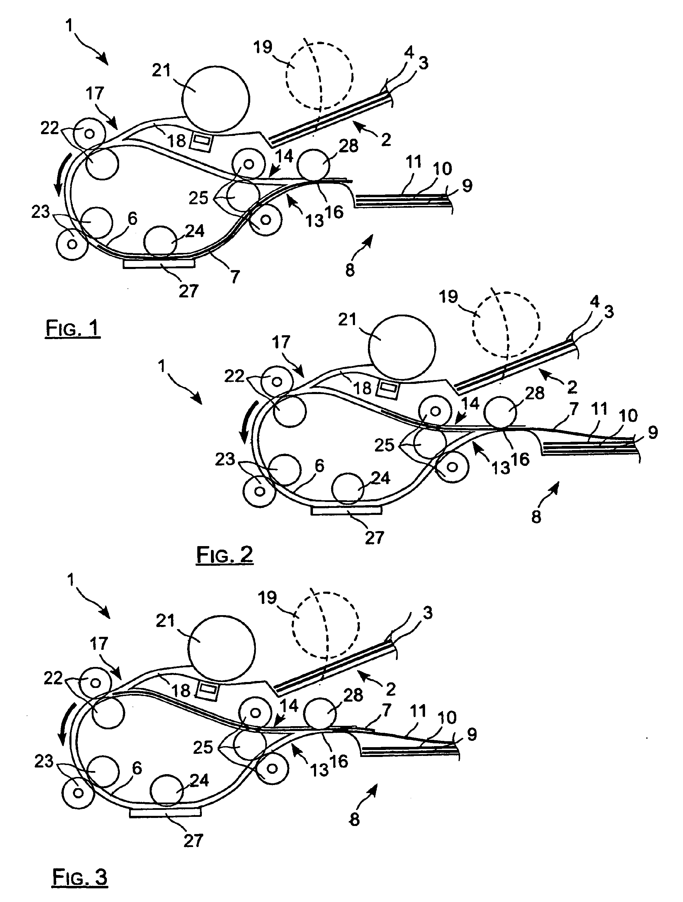

En fonctionnement, une feuille à traiter telle que la feuille 7 est d'abord extraite du bac 2 et transférée vers l'entrée 17 par deux rouleaux 19 et 21. Elle est ensuite déplacée vers la première extrémité 13 du chemin 6 par un ensemble de rouleaux 22 à 25. La feuille 7 passe alors devant un organe 27 qui scanne son recto, et sort par la première extrémité 13 du chemin 6, ce qui correspond à la situation de la figure 1.

La feuille 7 est ensuite extraite du chemin 6 via la première extrémité 13, par un rouleau 28, qui la place dans une situation où la majorité de cette feuille repose dans le bac de collecte 8, son extrémité restant pincée par le rouleau 28. Le rouleau 28 tourne ensuite en sens inverse pour introduire la feuille 7 dans le chemin 6, mais par la seconde extrémité 14 afin de la retourner, ce qui correspond à la situation de la figure 2.

La feuille 7 est alors déplacée dans le chemin 6 vers la première extrémité 13 pour présenter son verso à l'organe 27, afin de le scanner, et elle est ensuite extraite du chemin 6 par le rouleau 28, pour être cette fois-ci complètement éjectée dans le bac de collecte 8.

Comme visible dans la figure 3, lors de la réintroduction de la feuille 7 par la seconde extrémité du chemin 6, la feuille supérieure du bac de collecte 8, à savoir la feuille 11, peut être entraînée avec la feuille 7 et se réintroduire dans la voie de transfert 16.

Cette situation constitue une source de bourrage, provoquant le blocage de l'appareil, nécessitant sa réinitialisation et son redémarrage. Dans le cas où la feuille 11 s'engage complètement dans le chemin 6 avec la feuille 7 sans provoquer de bourrage, cela provoque un déclassement des feuilles traitées dans le bac de collecte 8.

Ainsi, d'une manière générale, le risque de ravalement dans l'appareil d'une feuille déjà traitée est important, lors de l'opération de retournement.

Dans le document US 5014976 on prévoit d'équiper la voie de transfert d'une patte qui est flexible pour être mobile entre une position haute et une position basse, cette patte ayant une forme de rampe dans sa partie orientée vers le chemin de traitement, et une forme de crochet formant obstacle en direction du bac d'éjection. Elle est naturellement rappelée en position haute pour s'opposer au ravalement d'une feuille en provenance du bac grâce à sa partie en forme de crochet, et elle peut s'abaisser grâce à sa partie en forme de rampe pour permettre la sortie d'une feuille vers le bac d'éjection.

### OBJET DE L'INVENTION

Le but de l'invention est de proposer une autre solution pour remédier aux inconvénients ci-dessus.

### RESUME DE L'INVENTION

A cet effet, l'invention a pour objet un dispositif de traitement de feuilles, comportant un chemin dans lequel chaque feuille est déplacée pour être traitée, et des moyens d'extraction et d'insertion comportant une voie de transfert dans laquelle débouche au moins une extrémité du chemin, pour successivement extraire au moins partiellement une feuille de ce chemin et l'insérer dans ce chemin, caractérisé en ce qu'il comporte un organe fixe pourvu d'aspérités sous forme d'au moins une série d'indentations agencées pour s'opposer à l'engagement dans la voie de transfert d'une feuille ayant été préalablement complètement extraite via cette voie de transfert.

Lors de la réinsertion d'une feuille partiellement extraite pour être retournée, les aspérités s'opposent au ravalement d'une autre feuille susceptible d'être entraînée par la feuille en cours de retournement, en bloquant le bord avant de la feuille susceptible d'être ravalée.

L'invention concerne également un dispositif tel que défini ci-dessus, dans lequel l'organe est situé entre deux tronçons cylindriques d'un même rouleau d'insertion et d'extraction, et dans lequel cet organe comprend une portion supérieure qui comprend des indentations et qui est en retrait par rapport au rouleau.

L'invention concerne également un dispositif tel que défini ci-dessus, dans lequel les indentations ont des formes de marches d'escalier.

L'invention concerne également un dispositif tel que défini ci-dessus, comportant un chemin dans lequel chaque feuille est déplacée pour être traitée, et des moyens d'extraction et d'insertion comportant une voie de transfert dans laquelle débouche au moins une extrémité du chemin, pour successivement extraire au moins partiellement une feuille de ce chemin et l'insérer dans ce chemin, **caractérisé en ce qu**'il comporte un organe pourvu d'aspérités sous forme d'un galet dentelé apte à tourner uniquement dans un sens correspondant à l'extraction d'une feuille pour s'opposer à l'engagement dans la voie de transfert d'une feuille ayant été préalablement complètement extraite via cette voie de transfert.

L'invention concerne également un dispositif tel que défini ci-dessus, dans lequel le galet dentelé est monté en roue libre sur un axe le portant.

L'invention concerne également un dispositif de traitement de feuilles, dans lequel le galet dentelé est monté en roue libre sur un axe portant un rouleau faisant partie des moyens d'extraction et d'insertion, et dans lequel ce galet frotte contre une partie fixe du dispositif de traitement, de manière à être immobilisé lorsque cet axe est entraîné pour faire tourner le rouleau afin d'insérer une feuille.

Lors de la réinsertion d'une feuille partiellement extraite pour être retournée, les aspérités s'opposent au ravalement d'une autre feuille susceptible d'être entraînée par la feuille en cours de retournement, en bloquant le bord avant de la feuille susceptible d'être ravalée.

L'invention concerne également un dispositif tel que défini ci-dessus, dans lequel l'organe portant chaque aspérité est monté dans une région centrale de la voie de transfert.

L'invention concerne également un dispositif tel que défini ci-dessus, dans lequel l'organe portant chaque aspérité dépasse d'une paroi de guidage située entre la voie de transfert et un bac de collecte de feuilles équipant le dispositif.

L'invention concerne également un dispositif tel que défini ci-dessus, dans lequel l'organe portant chaque aspérité est situé en partie inférieure des moyens d'extraction et d'insertion.

### BREVE DESCRIPTION DES FIGURES

- La figure 1 déjà décrite est une vue schématique en coupe latérale d'un dispositif connu traitant le recto d'une feuille ;
- La figure 2 déjà décrite est une vue schématique en coupe latérale du dispositif de la figure 1 lors de la réintroduction d'une feuille en vue du traitement de son verso ;
- La figure 3 déjà décrite est une vue schématique en coupe latérale du dispositif de la figure 1 lors d'un bourrage provoqué par le ravalement d'une feuille préalablement traitée ;
- La figure 4 est une vue schématique en coupe latérale du dispositif selon un premier mode de réalisation de l'invention comportant une feuille dont le recto est en cours de traitement ;
- La figure 5 est une vue schématique en coupe latérale agrandie montrant les moyens d'extraction et d'introduction du premier mode de réalisation de l'invention durant l'extraction d'une feuille en vue de la retourner ;
- La figure 6 est une vue schématique en coupe latérale agrandie montrant les moyens d'extraction du premier mode de réalisation de l'invention lors de la réintroduction d'une feuille qui entraîne avec elle une autre feuille ;
- La figure 7 est une vue schématique montrant de face les moyens d'extraction et d'introduction d'une feuille d'un second mode de réalisation de l'invention ;
- La figure 8 est une vue schématique en coupe latérale agrandie montrant les moyens d'extraction et d'introduction du second mode de réalisation de l'invention durant l'extraction d'une feuille en vue de la retourner ;
- La figure 9 est une vue schématique en coupe latérale agrandie montrant les moyens d'extraction du second mode de réalisation de l'invention lors de la réintroduction d'une feuille qui entraîne avec elle une autre feuille.

### DESCRIPTION DETAILLEE DE L'INVENTION

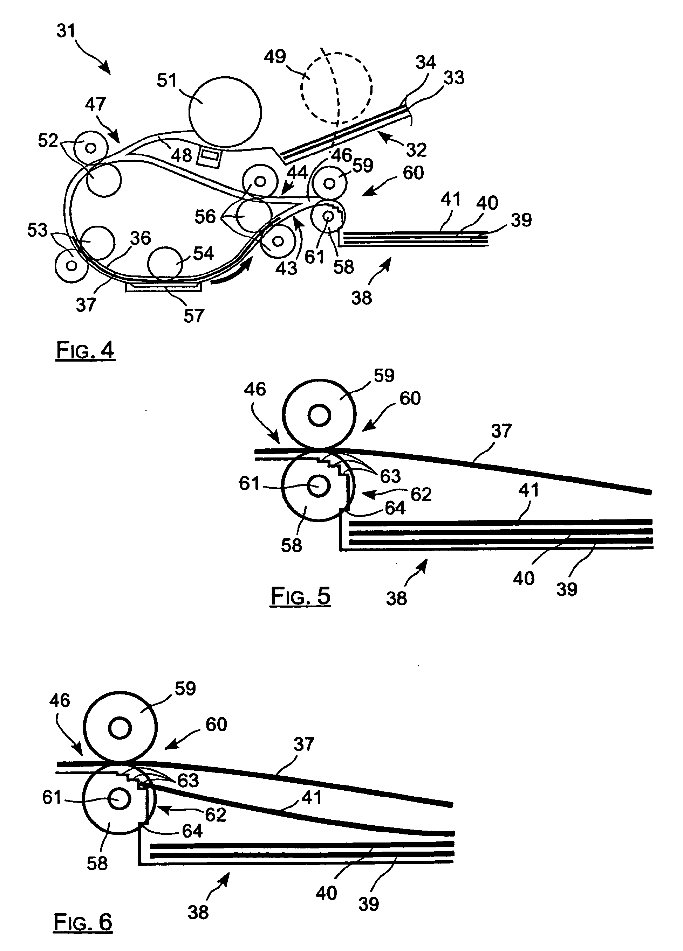

Dans l'exemple des figures, l'invention est appliquée à un scanner recto/verso repéré par 31. Comme visible en figure 4, ce scanner 31 comporte un bac d'approvisionnement 32 dans lequel sont empilées des feuilles 33 et 34 à traiter, un chemin 36 dans lequel une feuille 37 est engagée et déplacée pour traiter son recto et son verso, ainsi qu'un bac de collecte 38 dans lequel sont empilées trois feuilles 39, 40 et 41 préalablement traitées.

Ce chemin 36 a une forme générale en boucle, il comporte une première extrémité 43, une seconde extrémité 44 qui convergent vers une voie de transfert 46, ainsi qu'une entrée 47 de feuilles située entre ces extrémités. La première et la seconde extrémités 43 et 44 sont situées l'une au dessus de l'autre, elles constituent respectivement l'extrémité inférieure et l'extrémité supérieure du chemin 36.

Les feuilles sont transférées depuis le bac 32 vers l'entrée 47 via un canal d'approvisionnement 48, au moyen de deux rouleaux 49 et 51 situés respectivement au dessus du bac 32 et au niveau du canal 48 pour les déplacer successivement depuis le bac 32, vers le chemin 36 en entraînant ces rouleaux en rotation.

Chaque feuille est déplacée dans le chemin 36 par un ensemble de rouleaux entraînés en rotation. Deux rouleaux constituant une première paire 52 sont montés de part et d'autre du chemin 36, et deux autres rouleaux constituant une seconde paire 53 sont aussi montés de part et d'autre du chemin 36, tout en étant espacés de la première paire.

La première paire 52 est située en aval de l'entrée 47, la seconde paire 53 étant située en aval de la première, par rapport au sens de circulation des feuilles dans le chemin 36 tel qu'indiqué par une flèche dans les figures. Un scanner proprement dit 57 est monté le long du chemin 36, en aval de la seconde paire de rouleaux 53, un rouleau presseur 54 étant prévu en vis-à-vis de ce scanner 57 pour appliquer la feuille à traiter contre celui-ci.

Un groupe de trois autres rouleaux 56 est associé au chemin 36 en étant situé au niveau des extrémités 43 et 44. Il comprend un rouleau central ainsi qu'un rouleau inférieur en appui sur le rouleau central au niveau de l'extrémité inférieure 43 du chemin 36, ainsi qu'un rouleau supérieur en appui sur le rouleau central au niveau de l'extrémité supérieure 44 du chemin 36.

Le dispositif comprend d'autre part des moyens 60 pour extraire une feuille provenant de l'extrémité inférieure 43 du chemin 36 et pour la réinsérer dans ce chemin 36 via l'extrémité supérieure 44 afin de la retourner.

Ces moyens 60 comportent la voie de transfert 46, ainsi qu'un rouleau inférieur 58 et un rouleau supérieur 59 entraînés en rotation par des moyens non représentés. Ces rouleaux 58 et 59 sont situés de part et d'autre de la voie de transfert 46 et maintenus en appui l'un contre l'autre pour pincer une feuille passant dans cette voie de transfert 46 afin de la déplacer pour l'extraire ou pour l'insérer dans le chemin.

Le rouleau inférieur 58 qui est représenté de façon schématique en vue latérale dans les figures comporte typiquement deux tronçons cylindriques, qui sont montés sur un même axe transversal repéré par 61 en étant espacés l'un de l'autre le long de cet axe.

Selon l'invention, un obstacle 62 est monté au niveau de la voie de transfert 46, de manière à s'opposer, lorsqu'une feuille est retournée dans cette voie de transfert, à la réintroduction d'une autre feuille qui a été préalablement complètement extraite, et qui pourrait être entraînée par la feuille en cours de retournement.

Dans l'exemple des figures 4 à 6, l'obstacle 62 est un organe fixe qui est placé entre les deux tronçons cylindriques du rouleau 58. Il dépasse ou affleure d'une paroi qui guide chaque feuille sortant des moyens de transfert 60 vers le bac de collecte 38, et il comporte des aspérités agencées pour bloquer une feuille qui serait entraînée par la feuille en cours de retournement. Ces aspérités sont notamment orientées vers le bac de collecte pour bloquer le bord avant d'une feuille provenant de ce bac 38 et se déplaçant vers les moyens de transfert 60.

Ces aspérités sont ici constituées par la forme du profil de l'obstacle 62 vu parallèlement à l'axe 61, qui comporte une série d'indentations 63 dans sa partie supérieure, ainsi qu'une autre indentation 64 située au niveau de sa partie supérieure. Ces indentations qui sont en vis-à-vis du bac de collecte sont représentées schématiquement par des marches d'escalier dans les figures, mais d'autres formes anguleuses peuvent également s'avérer être tout à fait adaptées.

Comme visible dans les vues de profil des figures 4 à 6, la portion supérieure de l'obstacle 62, qui comporte les indentations 63, est située en retrait par rapport au rouleau 58, c'est à dire inscrite à l'intérieur du contour circulaire de ce rouleau lorsque vue de profil. Cet obstacle fixe 62 est en fait placé sensiblement au centre de l'intervalle séparant les tronçons cylindriques le long de l'axe 61.

En fonctionnement, lorsqu'une feuille telle que la feuille 37 est retournée, elle est d'abord dirigée par les moyens 60 vers le bac 38, ce qui correspond à la situation de la figure 5. Les indentations supérieures 63 de l'obstacle 62 étant situées en retrait par rapport au contour du rouleau 58 tout en étant orientées vers le bac 38, elles ne s'opposent pas au déplacement vers le bac de la feuille 37 en cours de retournement.

Lorsque cette feuille 37 est réintroduite dans le chemin 36 par les moyens 60, si elle entraîne avec elle une autre feuille telle que la feuille supérieure du bac 38, à savoir la feuille 41, la région centrale du bord avant de cette dernière feuille 41 vient alors en butée dans l'une des échancrures 63, ce qui l'empêche d'être avalée en direction du chemin 36.

Comme indiqué plus haut, l'obstacle 62 est placé dans une région centrale entre les tronçons cylindriques constituant le rouleau 58, de sorte qu'il ne constitue pas un obstacle à une feuille qui est extraite par les moyens 60. Mais dans le cas où une feuille est entraînée par une autre durant un retournement, la feuille entraînée fléchit nécessairement, entre les deux tronçons de rouleaux, de telle sorte que sa région centrale, en particulier au niveau de son bord avant, est plus basse que ses bords latéraux. Dans ce cas, la région centrale du bord avant de la feuille entraînée vient nécessairement se bloquer dans l'une des échancrures 63 bien que celles-ci soient en retrait par rapport au rouleau 58.

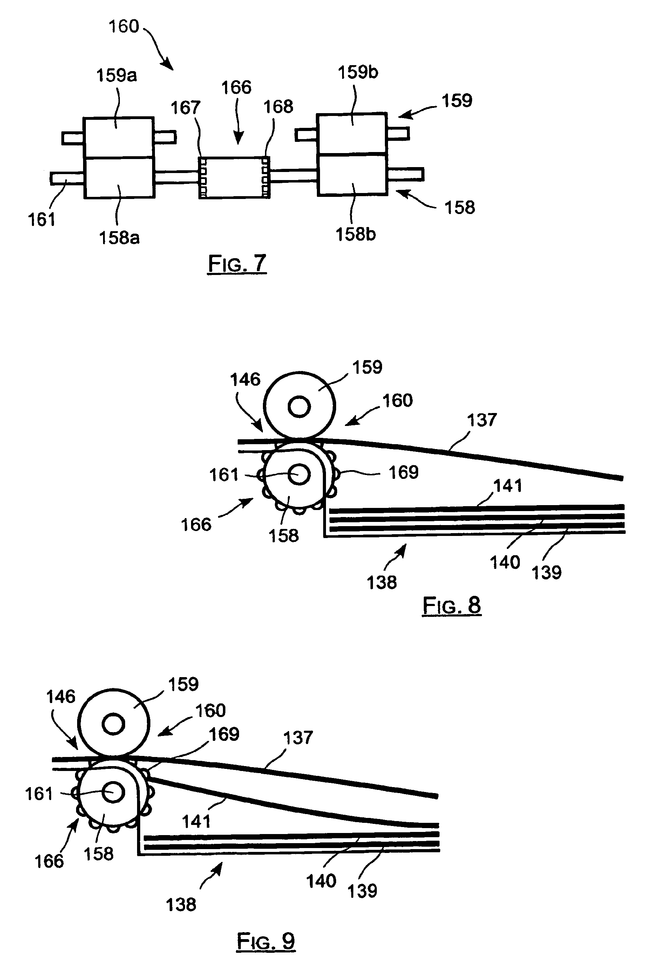

Dans un second mode de réalisation de l'invention qui est représenté sur les figures 7 à 9, l'organe formant obstacle au ravalement d'une feuille est un galet dentelé mobile en rotation uniquement dans un sens correspondant à l'éjection d'une feuille provenant du chemin de traitement.

Comme visible dans les figures 7 à 9, cet autre mode de réalisation comprend des éléments communs avec le mode de réalisation des figures 4 à 6. Chaque élément du second mode de réalisation auquel correspond un élément du premier mode de réalisation porte une référence numérique correspondant à celle de l'élément du premier mode de réalisation augmentée de la valeur cent.

Dans ce second mode de réalisation, les moyens 160 d'extraction et d'insertion d'une feuille provenant du chemin de traitement comportent un rouleau inférieur 158 et un rouleau supérieur 159.

Le rouleau inférieur 158 comprend un premier et un second tronçon cylindrique repérés par 158a et 158b portés par un axe commun 161 en étant situés aux extrémités de cet axe. Le rouleau supérieur 159 comprend lui aussi un premier et un second tronçon cylindrique 159a et 159b qui sont en appui respectivement sur le premier et le second tronçon cylindrique 158a et 158b constituant le rouleau inférieur 158.

Le galet dentelé formant obstacle au ravalement d'une feuille, qui est repéré par 166, est monté sur l'axe 161 portant les tronçons cylindriques 158a et 158b, en ayant lui aussi une forme généralement cylindrique et en étant situé à mi-distance entre ces tronçons cylindriques.

Il comporte une première série de dentelures 167 s'étendant sur tout le périmètre de sa surface externe en étant située au niveau d'une première extrémité de ce galet, et une seconde série de dentelures 168 s'étendant sur tout le périmètre de sa surface externe en étant située au niveau d'une seconde extrémité opposée à la première.

Chaque série est formée par des dents 169 dépassant radialement du galet, tout autour de celui-ci, pour constituer des aspérités dont au moins une partie est orientée vers le bac de collecte 138 tout en dépassant d'une paroi de guidage des feuilles s'étendant depuis la voie de transfert jusqu'au bac de collecte, de façon à bloquer le bord d'une feuille tendant à être ravalée dans le chemin de traitement durant le retournement d'une autre feuille.

Ce galet dentelé 166 est monté en roue libre sur l'axe 161, de manière à être entraîné en rotation lorsque le rouleau inférieur 158 tourne pour extraire une feuille du chemin de traitement, et pour ne pas être entraîné en rotation lorsque le rouleau 158 tourne en sens inverse c'est-à-dire lorsqu'il est entraîné pour réintroduire une feuille dans le chemin de traitement.

Concrètement, ceci peut être obtenu en montant le galet dentelé 166 sur l'axe 161, via une roue libre, et en prévoyant un léger frottement de ce galet contre une partie fixe de l'appareil. Dans ce cas, lors de l'extraction d'une feuille, la rotation de l'axe 161 provoque une rotation du galet dentelé 166 à l'encontre de ce frottement.

Lors de l'insertion d'une feuille en cours de retournement, le galets 166 n'est alors pas entraîné par l'axe 161 du fait de la roue libre, et les efforts de frottement apparaissant entre la partie fixe et le galet 166 suffisent à maintenir ce galet immobile, pour que les aspérités que constituent ses dentelures puissent efficacement empêcher le ravalement d'une feuille.

En fonctionnement, lorsqu'une feuille 137 est extraite du chemin de traitement, elle est entraînée conjointement par les tronçons cylindriques 158a et 158b du rouleau inférieur, et par le galet dentelé 166, ce qui correspond à la situation de la figure 8.

Lorsque cette feuille 137 est réintroduite dans le chemin par les moyens 160, si elle entraîne avec elle une autre feuille telle que la feuille supérieure 141, contenue dans le bac 138, le bord avant de cette dernière feuille 141 vient se bloquer entre les deux dents 169 de chacune des dentelures portées par le galet dentelé 166. Dans cette situation, comme le galet 166 est immobile en rotation, la feuille 141 est bloquée et ne peut par conséquent pas être ravalée.

Comme on l'aura compris, l'obstacle du dispositif selon l'invention, qu'il soit fixe ou mobile, annule le risque de bourrage lors du retournement d'une feuille. Ceci permet notamment d'équiper les moyens d'insertion et d'extraction d'un second rouleau, tout en excluant le risque de ravalement d'une feuille déjà traitée susceptible d'être entraînée par ce second rouleau.

Dans l'exemple des figures, l'invention est appliquée à un scanner de type recto/verso. Mais elle s'applique de façon générale aux appareils dans lesquels chaque feuille est successivement au moins partiellement extraite d'un chemin de traitement puis réinsérée dans ce chemin.

L'invention s'applique ainsi aux appareils de traitement de feuilles en recto/verso, et à d'autres appareils tels que notamment les imprimantes photo thermiques dans lesquelles chaque feuille est déplacée selon un mouvement de va et vient pour l'application successive de trois couleurs primaires.

## Revendications

1. Dispositif (31) de traitement de feuilles, comportant un chemin (36) dans lequel chaque feuille (37) est déplacée pour être traitée, et des moyens (60) d'extraction et d'insertion comportant une voie de transfert (46) dans laquelle débouche au moins une extrémité (43, 44) du chemin (36), pour successivement extraire au moins partiellement une feuille (37) de ce chemin (36) et l'insérer dans ce chemin, **caractérisé en ce qu'**il comporte un organe (62) fixe pourvu d'aspérités sous forme d'au moins une série d'indentations (63, 64) agencées pour s'opposer à l'engagement dans la voie de transfert d'une feuille (41) ayant été préalablement complètement extraite via cette voie de transfert (60).

2. Dispositif selon la revendication 1, dans lequel l'organe (62) est situé entre deux tronçons cylindriques d'un même rouleau (58) d'insertion et d'extraction, et dans lequel cet organe (62) comprend une portion supérieure qui comprend des indentations (63) et qui est en retrait par rapport au rouleau (58).

3. Dispositif selon la revendication 1 ou 2 dans lequel les indentations (63) ont des formes de marches d'escalier.

4. Dispositif de traitement de feuilles, comportant un chemin dans lequel chaque feuille (137) est déplacée pour être traitée, et des moyens (160) d'extraction et d'insertion comportant une voie de transfert (146) dans laquelle débouche au moins une extrémité du chemin, pour successivement extraire au moins partiellement une feuille (137) de ce chemin et l'insérer dans ce chemin, **caractérisé en ce qu'**il comporte un organe pourvu d'aspérités sous forme d'un galet dentelé (166) apte à tourner uniquement dans un sens correspondant à l'extraction d'une feuille pour s'opposer à l'engagement dans la voie de transfert d'une feuille (141) ayant été préalablement complètement extraite via cette voie de transfert (160).

5. Dispositif selon la revendication 4, dans lequel le galet dentelé (166) est monté en roue libre sur un axe (161) le portant.

6. Dispositif selon la revendication 5, dans lequel le galet dentelé (166) est monté en roue libre sur un axe (161) portant un rouleau (158) faisant partie des moyens d'extraction et d'insertion (160), et dans lequel ce galet frotte contre une partie fixe du dispositif de traitement, de manière à être immobilisé lorsque cet axe (161) est entraîné pour faire tourner le rouleau afin d'insérer une feuille.

7. Dispositif selon l'une des revendications 1 à 6, dans lequel l'organe (166) portant chaque aspérité (167, 168, 169) est monté dans une région centrale de la voie de transfert (160).

8. Dispositif selon l'une des revendications précédentes, dans lequel l'organe (62 ; 166) portant chaque aspérité (63, 34 ; 167, 168, 169) dépasse d'une paroi de guidage située entre la voie de transfert et un bac (38 ; 138) de collecte de feuilles équipant le dispositif.

9. Dispositif selon l'une des revendications précédentes, dans lequel l'organe (62 ; 166) portant chaque aspérité est situé en partie inférieure des moyens d'extraction et d'insertion (60 ; 160).

## Claims

1. A sheet-processor device (31) including a path (36) in which each sheet (37) is moved in order to be processed, and extraction and insertion means (60) including a transfer channel (46) into which at least one end (43, 44) of the path (36) leads in order successively to extract at least in part a sheet (37) from the path (36) and to insert it into the path, the device being **characterized in that** it includes a stationary member (62) provided with roughnesses in the form of at least one series of indentations (63, 64) arranged to oppose the engagement into the transfer channel of a sheet (41) that has previously been fully extracted via said transfer channel (60).

2. A device according to claim 1, wherein the member (62) is situated between two cylindrical segments of a given insertion and extraction roller (58), and wherein the member (62) has a top portion that includes indentations (63) and that is set back relative to the roller (58).

3. A device according to claim 1 or claim 2, wherein the indentations (63) are staircase-shaped.

4. A sheet processor device including a path in which each sheet (137) is moved in order to be processed, and extraction and insertion means (160) including a transfer channel (146) into which at least one end of the path leads in order successively to extract at least in part a sheet (137) from the path and to insert it into the path, the device being **characterized in that** it includes a member provided with roughnesses in the form of a serrated wheel (166) suitable for turning only in a direction corresponding to extracting a sheet in order to oppose the engagement into the transfer channel of a sheet (141) that has previously been fully extracted via said transfer channel (160).

5. A device according to claim 4, wherein the serrated heel (166) is freewheel-mounted on a shaft (161) carrying it.

6. A device according to claim 5, wherein the serrated wheel (166) is freewheel-mounted on a shaft (161) carrying a roller (158) forming a portion of the extraction and insertion means (160), and wherein the wheel rubs against a stationary portion of the processor device in such a manner as to be prevented from moving when the shaft (161) is driven in order to turn the roller for inserting a sheet.

7. A device according to any one of claims 1 to 6, wherein the member (166) carrying each roughness (167, 168, 169) is mounted in a central region of the transfer channel (160).

8. A device according to any preceding claim, wherein the member (62; 166) carrying each roughness (63, 34; 167, 168, 169) projects from a guide wall situated between the transfer channel and a sheet-collection bin (38; 138) with which the device is fitted.

9. A device according to any preceding claim, wherein the member (62; 166) carrying each roughness is situated in the bottom portion of the extraction and insertion means (60; 160).

## Patentansprüche

1. Vorrichtung (31) zum Behandeln von Blättern, umfassend einen Pfad (36), in dem jedes Blatt (37) bewegt wird, um behandelt zu werden und Mittel (60) zum Herausziehen und Einführen, die einen Transferweg (46) umfassen, in den mindestens ein Ende (43, 44) des Pfads (36) mündet, so dass ein Blatt (37) mindestens teilweise sukzessiv aus diesem Pfad (36) herausgezogen und in diesen Pfad eingeführt werden kann, **dadurch gekennzeichnet, dass** sie ein festes Organ (62) enthält, das Unebenheiten in Form von mindestens einer Reihe von Auszahnungen (63, 64) aufweist, die so ausgebildet sind, dass sie im Transferweg einem Erfassen eines Blattes (41), das zuvor vollständig über diesen Transferweg (60) herausgezogen worden ist, entgegenwirken.

2. Vorrichtung nach Anspruch 1, bei der sich das Organ (62) zwischen zwei zylindrischen Abschnitten derselben Rolle (58) zum Einführen und Herausziehen befindet und bei der dieses Organ (62) einen oberen Abschnitt umfasst, der Auszahnungen (63) hat und der relativ zur Rolle (58) zurückgesetzt ist.

3. Vorrichtung nach Anspruch 1 oder 2, bei der die Auszahnungen (63) die Form von Treppenstufen haben.

4. Vorrichtung zum Behandeln von Blättern, die einen Pfad umfasst, in dem jedes Blatt (137) bewegt wird, um behandelt zu werden sowie Mittel (160) zum Herausziehen und Einführen, die einen Transferweg (146) umfassen, in welchen mindestens ein Ende des Pfads mündet, so dass ein Blatt (137) mindestens teilweise sukzessiv aus diesem Pfad herausgezogen und in diesen Pfad eingeführt wird, **dadurch gekennzeichnet, dass** sie ein Organ umfasst, das mit Unebenheiten in Form einer gezahnten Rolle (166) versehen ist, die sich einzig in einer Richtung drehen kann, die dem Herausziehen eines Blattes entspricht, um einer Einführung in den Transferweg eines Blattes (141), das zuvor vollständig über diesen Transferweg (160) herausgezogen worden ist, entgegenzuwirken.

5. Vorrichtung nach Anspruch 4, bei der die gezahnte Rolle (166) mit einem Freilauf auf einer sie tragenden Achse (161) angebracht ist.

6. Vorrichtung nach Anspruch 5, bei der die gezahnte Rolle (166) mit einem Freilauf auf einer Achse (161) mit einer Rolle (158) angebracht ist, die Teil der Mittel zum Herausziehen und Einführen (160) ist und bei der diese Rolle so an einem festen Teil der Vorrichtung zur Behandlung reibt, dass sie immobilisiert ist, wenn diese Achse (161) angetrieben wird, damit die Rolle zum Drehen gebracht wird, um ein Blatt einzuführen.

7. Vorrichtung nach einem der Ansprüche 1 bis 6, bei der das jede Unebenheit (167, 168, 169) tragende Organ (166) in einem zentralen Bereich des Transferwegs (160) angeordnet ist.

8. Vorrichtung nach einem der vorhergehenden Ansprüche, bei der das jede Unebenheit (63, 34; 167, 168, 169) tragende Organ (62; 166) aus einer Führungswand herausragt, die sich zwischen dem Transferweg und einem Behälter (38; 138) zum Sammeln der Blätter, mit dem die Vorrichtung ausgestattet ist, befindet.

9. Vorrichtung nach einem der vorhergehenden Ansprüche, bei der sich das jede Unebenheit tragende Organ (62; 166) im unteren Teil der Mittel zum Herausziehen und Einführen (60; 160) befindet.
